# EUROPÄISCHE PATENTSCHRIFT

(11) **EP 0 978 527 B1**
(45) Veröffentlichungstag und Bekanntmachung des Hinweises auf die Patenterteilung: **03.11.2004**
(21) Anmeldenummer: 99115379.2
(22) Anmeldetag: 04.08.1999
(51) Int. Cl.: C08J 9/00, C08J 9/20, C08L 25/04

(54) **Verfahren zur Herstellung von expandierbaren Styrolpolymerisaten**
Process for producing expandable styrenic polymers
Procédé de préparation de polymères styréniques expansibles

(30) Priorität: 06.08.1998 DE 19835495
(43) Veröffentlichungstag der Anmeldung: 09.02.2000
(73) Patentinhaber: BASF AKTIENGESELLSCHAFT, 67056 Ludwigshafen (DE)
(72) Erfinder: Glück, Guiscard, Dr., 55129 Mainz (DE); Batscheider, Karl-Heinz, 67112 Mutterstadt (DE)

(56) Entgegenhaltungen:
- EP-A- 0 488 040
- DE-U- 29 616 362
- CHEMICAL ABSTRACTS, vol. 129, no. 7, 17. August 1998 (1998-08-17) Columbus, Ohio, US; abstract no. 82082, HIGUCHI, YASUSHI ET AL: "Manufacture method for styrene-methyl methacrylate type polymer" XP002122761 & JP 10 152505 A (MITSUBISHI GAS CHEMICAL CO., INC., JAPAN) 9. Juni 1998 (1998-06-09)

## Beschreibung

Die Erfindung betrifft ein verbessertes Verfahren zur Herstellung expandierbarer Styrolpolymerisate (EPS).

Die Suspensionspolymerisation von Styrol zur Herstellung von EPS wird gewöhnlich als diskontinuierlicher Prozeß mit einem ansteigendem Temperaturprofil durchgeführt. Als Polymerisationsinitiatoren werden Peroxide mit unterschiedlichen Halbwertszeiten verwendet. Nach EP-A 488 040 verwendet man Dibenzoylperoxid während der ersten Stufe der Polymerisation bei circa 80 bis 90°C, sowie ein höher zerfallendes Peroxid wie Dicumylperoxid während der zweiten Stufe der Polymerisation bei circa 105 bis 130°C. Mit dieser Verfahrensweise ist man in der Lage, ein benzolfreies EPS mit geringen Restmonomergehalten zu erzielen. Die Verwendung von Peroxiden mit unterschiedlichen Halbwertszeiten in Abhängigkeit von der Temperatur gestattet eine kontrollierte Abfuhr der Reaktionswärme über den gesamten Prozeß. Dies ist insbesondere wichtig für große Reaktionsgefäße, wie sie in der industriellen Produktion zur Anwendung kommen, welche über ein ungünstiges Volumen/Oberflächen-Verhältnis zur Wärmeabfuhr verfügen.

Es hat sich gezeigt, daß bei dieser Arbeitsweise die entstandenen EPS-Partikel einen verhältnismäßig hohen Innenwassergehalt aufweisen, was bei längerem Lagern zum Ausschwitzen des Wassers und damit zu Verklebungen bei der Verarbeitung führen kann und beim Vorschäumen Schaumpartikel mit unregelmäßiger Zellstruktur ergibt. Außerdem ist in vielen Fällen der Restmonomergehalt noch zu hoch. Diese Erscheinungen sind besonders ausgeprägt, wenn man nach der Patentanmeldung WO-A-98/51734 die Polymerisation in Gegenwart von 0,05 bis 25 Gew.-% Graphitpartikel durchführt, was die Herstellung von Schaumstoffen mit verminderter Wärmeleitfähigkeit ermöglicht.

Der Erfindung lag daher die Aufgabe zugrunde, bei der EPS-Herstellung den Innenwassergehalt und den Restmonomergehalt zu reduzieren.

Diese Aufgabe wird erfindungsgemäß dadurch gelöst, daß man als Peroxid B, das bei höherer Temperatur zerfällt, Di-tert.-amylperoxid der Formel 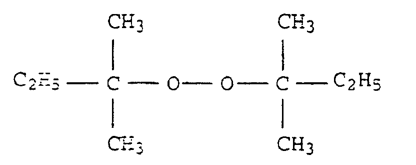 einsetzt.

Di-tert.-amylperoxid ist an sich bekannt, es wird von der Fa. AKZO NOBEL unter der Bezeichnung Trigonox 201 vertrieben und u.a. für die Polymerisation von Ethylen, Styrol und (Meth-)Acrylaten empfohlen. Es war jedoch nicht vorhersehbar, daß die Verwendung dieses Peroxids bei der Herstellung von expandierbaren Styrolpolymerisaten, insbesondere bei der Suspensions-Polymerisation in Gegenwart von Graphit, EPS-Partikel mit vermindertem Innenwassergehalt und Restmonomergehalt erhalten werden.

Gegenstand der Erfindung ist somit ein Verfahren zur Herstellung von expandierbaren Styrolpolymerisaten, bei dem man Styrol, gegebenenfalls zusammen mit bis zu 20 % seines Gewichts an Comonomeren, in wäßriger Suspension in Gegenwart von mindestens zwei, bei verschiedenen Temperaturen zerfallenden organischen Peroxiden A und B polymerisiert, wobei das Peroxid A eine Halbwertszeit von 1 Stunde bei 80°C bis 100°C, und das Peroxid B eine Halbwertszeit von 1 Stunde bei 110°C bis 150°C aufweist. Das Verfahren ist dadurch gekennzeichnet, daß das bei höherer Temperatur zerfallende Peroxid B Di-tert.-amylperoxid ist.

Bei der erfindungsgemäßen Suspensionspolymerisation wird als Monomer bevorzugt Styrol allein eingesetzt. Es kann jedoch zu bis zu 20 % seines Gewichts durch andere ethylenisch ungesättigte Monomere, wie Alkylstyrole, Divinylbenzol, Acrylnitril, 1,1-Diphenylether oder α-Methylstyrol ersetzt sein.

Bei der Suspensionspolymerisation können die üblichen Hilfsmittel, wie z.B. Suspensionsstabilisatoren, Treibmittel, Kettenüberträger, Expandierhilfsmittel, Keimbildner und Weichmacher zugesetzt werden. Besonders bevorzugt ist der Zusatz von Flammschutzmitteln, vorzugsweise in Mengen von 0,6 bis 6 Gew.-% und von Flammschutzsynergisten in Mengen von 0,1 bis 1 Gew.-%, jeweils bezogen auf das resultierende Styrolpolymerisat. Bevorzugte Flammschutzmittel sind aliphatische, cycloaliphatische und aromatische Bromverbindungen, wie Hexabromcyclododecan, Pentabrommonochlorcyclohexan und Pentabromphenylallylether. Geeignete Synergisten sind C-C- oder O-O-labile organische Verbindungen, wie Dicumyl und Dicumylperoxid. Treibmittel werden in Mengen von 3 bis 10 Gew.-%, bezogen auf Monomer zugesetzt. Man kann sie vor, während oder nach der Polymerisation der Suspension zusetzen. Geeignete Treibmittel sind aliphatische Kohlenwasserstoffe mit 4 bis 6 Kohlenstoffatomen. Es ist vorteilhaft, als Suspensionsstabilisatoren anorganische Pickering-Dispergatoren, z.B. Magnesiumpyrophosphat oder Calciumphosphat einzusetzen.

Besonders bevorzugt ist es, die Polymerisation - wie in WO-A-98/51734 beschrieben - in Gegenwart von 0,05 bis 25 Gew.-%, vorzugsweise von 1 bis 8 Gew.-% Graphitpartikeln mit einer mittleren Teilchengröße von vorzugsweise 1 bis 50 um durchzuführen.

Erfindungsgemäß wird die Suspensionspolymerisation in Gegenwart von mindestens zwei bei verschiedenen Temperaturen zerfallenden Peroxiden durchgeführt. Das bei der niedrigeren Temperatur zerfallende Peroxid A sollte eine Halbwertszeit von 1 Stunde bei 80°C bis 100°C, vorzugsweise von 85°C bis 95°C aufweisen; das bei der höheren Temperatur zerfallende Peroxid B ist Di-tert.-amylperoxid mit einer Halbwertszeit von 1 Stunde bei 128°C.

Die Suspensionspolymerisation wird zweckmäßigerweise - wie in der EP-A 405 324 beschrieben - in zwei Temperaturstufen durchgeführt. Dabei wird zunächst die Suspension innerhalb von etwa 2 Stunden auf 80°C bis 90°C erhitzt, wobei das Peroxid A zerfällt und die Polymerisation einleitet. Danach läßt man die Reaktionstemperatur, vorzugsweise um 8 bis 17°C pro Stunde, ansteigen bis auf 100 bis 130°C und hält bei dieser Temperatur so lange, bis der Restmonomerengehalt auf weniger als 1000 ppm abgesunken ist. Bei dieser Temperatur zerfällt das Peroxid B. Mit dieser Verfahrensweise ist man in der Lage, EPS mit geringen Restmonomergehalten, vorzugsweise von weniger als 500 ppm, zu erzeugen, bzw. die Polymerisationsdauer bis zur Unterschreitung von 1000 ppm Reststyrolgehalt deutlich zu verkürzen.

Das Peroxid A kann z.B. Dibenzoylperoxid sein, bevorzugt sind aber Peroxide, die beim Zerfall keine Benzoyl- und Benzylradikale bilden, z.B. tert.-Butylperoxy-2-ethylhexanoat, tert.-Amylperoxy-2-ethylhexanoat, tert.-Butylperoxy-diethylacetat sowie tert.-Butyl-peroxyisobutanoat. Das Peroxid A wird, bezogen auf 1 Mol Monomer, bevorzugt in Mengen von 0,01 bis 0,2 Mol %, insbesondere von 0,03 bis 0,15 Mol % eingesetzt.

Das Peroxid B wird, bezogen auf Monomer, bevorzugt in Mengen von 0,10 bis 1,0 Mol %, insbesondere von 0,16 bis 0,50 Mol %, eingesetzt. Das Molverhältnis der Peroxide B:A sollte vorzugsweise größer als 40:60, vorzugsweise größer als 50:50 sein.

Bei der Suspensionspolymerisation entstehen perlförmige, im wesentlichen runde Teilchen mit einem mittleren Durchmesser im Bereich von 0,2 bis 2 mm. Sie können mit den üblichen Beschichtungsmitteln, z.B. Metallstearaten, Glycerinestern und feinteiligen Silicaten beschichtet werden.

Die EPS-Partikel können zu Polystyrolschaumstoffen mit Dichten von 5 bis 100 g/l bevorzugt von 10 bis 50 g/l, verarbeitet werden. Hierzu werden die expandierbaren Partikel vorgeschäumt. Dies geschieht zumeist durch Erwärmen der Partikel mit Wasserdampf in sogenannten Vorschäumern. Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

### Beispiele

a) Beispiel mit Dicumylperoxid (Vergleich)
   In 15,0 kg Styrol werden 600 g pulverförmiger Graphit (Firma Kropfmühl) homogen suspendiert unter Beimischung von 1,5 kg Polystyrol, 200 g Hexabromcyclododecan, 70,0 g Dicumylperoxid und 12,0 g tert.-Butylperoxy-2-ethylhexanoat. Die organische Phase wird in 20,0 l vollentsalztes Wasser in einem 50 l Rührkessel eingebracht. Die wäßrige Phase enthält 50,0 g Natriumpyrophosphat und 100,0 g Magnesiumsulfat (Bittersalz). Man erhitzt die Suspension auf 80°C. Nach 140 Minuten wird 2,5 g Pentan nachdosiert und bei 125°C 5 Stunden auspolymerisiert. Man erhält ein perlförmiges Granulat, welches einen Innenwassergehalt von 2,7 % enthält und einen Reststyrolgehalt von 960 ppm aufweist.
b) Beispiel mit Di-tert.-amyl-peroxid (erfindungsgemäß)
   Es wird gearbeitet wie unter a), jedoch statt Dicumylperoxid wird Di-tert.-amyl-peroxid verwendet. Man erhält ein perlförmiges Granulat, welches einen Innenwassergehat1 von 1,4 % enthält und einen Reststyrolgehalt von 420 ppm aufweist.

## Patentansprüche

1. Verfahren zur Herstellung von expandierbaren Styrolpolymerisaten (EPS), bei dem man Styrol, gegebenenfalls zusammen mit bis zu 20 % seines Gewichts an Comonomeren, in wäßriger Suspension in Gegenwart von mindestens zwei, bei verschiedenen Temperaturen zerfallenden organischen Peroxiden A und B polymerisiert, wobei das Peroxid A eine Halbwertszeit von 1 Stunde bei 80°C bis 100°C, und das Peroxid B eine Halbwertszeit von 1 Stunde bei 110°C bis 150°C aufweist, **dadurch gekennzeichnet, daß** das bei höherer Temperatur zerfallende Peroxid B Di-tert.-amylperoxid ist.

2. Verfahren zur Herstellung von EPS nach Anspruch 1, **dadurch gekennzeichnet, daß**, bezogen auf das Monomer, 0,01 bis 0,20 Mol % Peroxid A und 0,10 bis 1,0 Mol % Peroxid B eingesetzt werden.

3. Verfahren zur Herstellung von EPS nach Anspruch 1, **dadurch gekennzeichnet, daß** man die Polymerisation in Gegenwart von 0,01 bis 25 Gew.-% Graphitpartikeln, bezogen auf die Monomeren, durchführt.

## Claims

1. A process for producing expandable styrene polymers (EPS) in which styrene, if desired together with up to 20% of its weight of comonomers, is polymerized in aqueous suspension in the presence of at least two organic peroxides A and B which decompose at different temperatures, where the peroxide A has a half-life period of 1 hour at from 80°C to 100°C and the peroxide B has a half-life period of 1 hour at from 110°C to 150°C, wherein the peroxide B which decomposes at the higher temperature is di-tert-amyl peroxide.

2. A process for producing EPS as claimed in claim 1, wherein from 0.01 to 0.20 mol% of peroxide A and from 0.10 to 1.0 mol% of peroxide B, based on the monomer, are used.

3. A process for producing EPS as claimed in claim 1, wherein the polymerization is carried out in the presence of from 0.01 to 25% by weight of graphite particles, based on the monomers.

## Revendications

1. Procédé de préparation de polymères styréniques expansibles (EPS), dans lequel on polymérise du styrène, éventuellement en même temps que jusqu'à 20% de son poids de comonomères, en suspension aqueuse et en présence d'au moins deux peroxydes organiques A et B se décomposant à des températures différentes, où le peroxyde A présente une largeur de valeur moyenne de 1 heure à des températures de 80°C à 100°C, et le peroxyde B une largeur de valeur moyenne de 1 heure à des températures de 110°C à 150°C, **caractérisé en ce que** le peroxyde B se décomposant à température plus élevée est du peroxyde de di-tert.-amyle.

2. Procédé de préparation d'EPS selon la revendication 1, **caractérisé en ce que**, par rapport au monomère, on met en oeuvre de 0,01 à 0,20% molaires de peroxyde A et de 0,10 à 1,0% molaire de peroxyde B.

3. Procédé de préparation d'EPS selon la revendication 1, **caractérisé en ce que** l'on entreprend la polymérisation en présence de 0,01 à 25% en poids de particules de graphite, par rapport au monomère.
